# EUROPÄISCHE PATENTSCHRIFT

(11) **EP 1 952 417 B1**
(45) Veröffentlichungstag und Bekanntmachung des Hinweises auf die Patenterteilung: **09.09.2009**
(21) Anmeldenummer: 06804393.4
(22) Anmeldetag: 17.11.2006
(51) Int. Cl.: H01J 9/02, H01J 1/304

(54) **LEUCHTSCHIRM**
LUMINESCENT SCREEN
ECRAN LUMINESCENT

(30) Priorität: 18.11.2005 AT 18792005
(43) Veröffentlichungstag der Anmeldung: 06.08.2008
(73) Patentinhaber: Electrovac AG, 3400 Klosterneuburg (AT)
(72) Erfinder: TANG, Xinhe, A-1220 Wien (AT); ZHANG, Xiaobing, Nanjing 210014 (CN); LEI, Wei, Nanjing 210000 (CN); HAMMEL, Ernst, 1140 Wien (AT)
(74) Vertreter: Gibler & Poth Patentanwälte OEG
(86) Internationale Anmeldenummer: PCT/AT2006/000472
(87) Internationale Veröffentlichungsnummer: WO 2007/056787

(56) Entgegenhaltungen:
- EP-A- 1 069 587
- EP-A1- 1 020 888
- EP-A1- 1 022 763
- WO-A-20/04114404
- US-A1- 2003 121 887
- US-A1- 2003 203 139

## Beschreibung

Die Erfindung betrifft ein Verfahren zur Herstellung einer Feldemissionsschicht, vorzugsweise für Leuchtschirmanwendungen, wobei auf einer, einer Kathode zugeordneten, Kathoden-Elektrode ein Gemisch aus einem Polymer und Kohlenstoff-Nanofasern aufgebracht wird, wobei die Kohlenstoff-Nanofasernbei Temperaturen von mehr als 2000°C, in sauerstoffarmer Atmosphäre gehärtet sind.

Es sind Verfahren zur Bildung einer Feldemissionsschicht umfassend Kohlenstoff-Nanofasern für Leuchtschirme, Bildschirme bzw. Displays bekannt, bei welchen eine Paste, welche Single Wall Carbon Nano Tubes umfasst auf eine Kathode aufgebracht wird. Mittels unterschiedlicher Verfahren, etwa mittels eines Klebebandes, welches auf das Trägersubstrat aufgebracht und von diesem abgezogen wird, werden beispielsweise wenigstens einzelne Single Wall Carbon Nano Tubes aus dem Trägermaterial herausgezogen. Diese, nach bekannten Verfahren gebildeten Leuchtschirme weisen allerdings den Nachteil auf, dass die verwendeten Trägermaterialien eine lediglich ungenügende Verbindung mit der Kathode eingehen. Dadurch kommt es zu Ablösungen des Trägermaterials und somit zu einem bereichsweisen Ausfall des Leuchtschirmes. Zusätzlich zu diesem, die Lebensdauer limitierenden Phänomen kommt es bei, nach bekannten Verfahren gebildeten Leuchtschirmen zu einem starken Abbrand der Single Wall Carbon Nano Tubes durch die hohe Erwärmung bei der Feldemission und damit zu einem stetigen Rückgang der Emissionsfähigkeit und damit auch der Leuchtkraft. Dadurch wird ein derartiger bekannter Leuchtschirm kontinuierlich schlechter bis hin zum Totalausfall.

Die US 2003/203139 A1 beschreibt ein Verfahren zur Bildung von Kohlenstoff-Nanofasern in den Dimensionen, wie diese auch bei Ihrer gegenständlichen Erfindung vorgesehen sind. Die Kohlenstoff-Nanofasern werden auf einem Metall-, Glass- und/oder Keramiksubstrat mittels sog. "plasma-enhanced hot filament chemical vapor deposition" gebildet.

Die EP 1 020 888 A1 beschreibt eine Tinte mit Kohlenstoff-Nanofasern, welche neben den besagten Kohlenstoff-Nanofasern weiters sog. Abstandhalter umfasst, welche dazu dienen wenigstens einzelne Kohlenstoff-Nanofasern "aufzustellen". Weiters umfasst die Tinte wenigstens ein organisches Bindemittel und ein Lösungsmittel. Nach Auftragen der Tinte mittels eines Druckverfahrens auf ein Trägersubstrat wird diese Erhitzt bzw. "Befeuert", wodurch die Abstandhalter, das organische Bindemittel und das Lösungsmittel verbrennen bzw. verdampfen, und eine reine Kohlenstoff-Nanofasern-Struktur auf dem Substrat zurückbleibt.

Aus der EP 1 069 587 A, der EP 1 022 763 A1, der US 2003/121887 A1 und der WO 2004/114404 A sind weitere Verfahren zur Herstellung sowie weitere Anwendungen von Kohlenstoff-Nanofasern bekannt.

Aufgabe der Erfindung ist es daher ein Verfahren zur Herstellung einer Feldemissionsschicht, vorzugsweise für Leuchtschirmanwendungen der eingangs genannten Art anzugeben, mit welchem die genannten Nachteile vermieden werden können, und durch welches Leuchtschirme mit verbesserter Lebensdauer und Langzeitstabilität geschaffen werden können.

Erfindungsgemäß wird dies dadurch erreicht, dass die Kathoden-Elektrode mit dem Kohlenstoff-Nanofasern/Polymer - Gemisch auf eine Temperatur zwischen 300 °C und 500 °C in einer zumindest Sauerstoff enthaltenden Atmosphäre erwärmt wird, wobei es zufolge des Sauerstoffs zu einer Pyrolyse und/oder zu einem Aushärten der polymeren Basis kommt, wenigstens ein Teil der Kohlenstoff-Nanofasern über wenigstens einen Teil der räumlichen Ausdehnung der Kohlenstoff-Nanofasern freigelegt wird, und dass die Kohlenstoff-Nanofasern von der ausgehärteten und/oder pyrolysierten polymeren Basis gehalten werden.

Durch das Aushärten bei den hohen Temperaturen sind die Kohlenstoff-Nanofasern weitestgehend widerstandsfähig gegen Oxidation, sodass bei der Pyrolyse an einer Atmosphäre, umfassend Sauerstoff, lediglich das Polymer pyrolysiert bzw. ausgehärtet wird, ohne das es zu einem nennenswerten Abbrand der Kohlenstoff-Nanofasern kommt. Zusätzlich kann durch die Kohlenstoff-Nanofasern die entstehende Wärme abgeführt werden, da diese eine gute Wärmeleitfähigkeit aufweisen. Durch die großen Durchmesser der Kohlenstoff-Nanofasern und/oder das Aushärten sind diese auch bei einem Abbrand noch lange Zeit emissionsfähig, welcher bei herkömmlichen Single Wall Carbon Nano Tubes bereits zu einer vollständigen Vernichtung der Faser geführt hätte, wobei nochmals darauf hingewiesen sein, dass der Grad an Abbrand bei den erfindungsgemäß verwendeten dickeren Kohlenstoff-Nanofasern wesentlich geringer ist als bei Single Wall Carbon Nano Tubes und/oder bei dünnen Multilayer-Nano-Tubes.

Durch die Pyrolyse der polymeren Basis werden ein Großteil der Kohlenstoff-Nanofasern bereichsweise freigelegt, wobei ein Bereich der polymeren Basis, welcher sich zwischen einem unteren Sockelbereich einer Kohlenstoff-Nanofaser und einer der Kathode zugeordneten Elektrode befindet durch die Wärme der Pyrolyse nicht abgetragen wird sondern aushärtet, wodurch eine sichere und dauerhafte Anbindung jeder einzelnen Kohlenstoff-Nanofaser an die Elektrode erreicht wird. Durch das Freilegen der Kohlenstoff-Nanofasern durch die Pyrolyse stehen mehr Kohlenstoff-Nanofasern für die Emission zur Verfügung.

Durch das Halten der Kohlenstoff-Nanofasern in einer ausgehärteten und/oder pyrolysierten polymeren Basis ist eine gute, dauerhafte und langzeitstabile Anbindung der Kohlenstoff-Nanofasern an die Kathode gegeben. Durch eine Pyrolyse kommt es zum Freilegen der obersten Schicht der Kohlenstoff-Nanofasern, wodurch diese gute Emissionseigenschaften aufweisen. Durch die Fähigkeit der Kohlenstoff-Nanofasern Wärme abzuführen kann eine Pyrolyse ohne nennenswerte Beeinträchtigung der Emissionsdichte, etwa durch übermäßigen Abbrand von Kohlenstoff-Nanofasern, angewendet werden.

In diesen Zusammenhang kann vorgesehen sein, dass die Kathoden-Elektrode mit dem Kohlenstoff-Nanofasern/Polymer - Gemisch in der zumindest Sauerstoff enthaltenden Atmosphäre auf eine Temperatur zwischen 380°C und 480°C, insbesondere zwischen 420°C und 450°C, erwärmt wird.

In weiterer Ausgestaltung der Erfindung kann vorgesehen sein, dass wenigstens ein Teil der Kohlenstoff-Nanofasern über wenigstens einen Teil der Länge der Kohlenstoff-Nanofasern, insbesondere wenigstens über die halbe Länge, freigelegt wird.

Gemäß einer weiteren Ausführungsform der Erfindung kann vorgesehen sein, dass die zumindest Sauerstoff enthaltenden Atmosphäre Luft beinhaltet.

Gemäß wieder einer anderen Ausführungsform der Erfindung kann vorgesehen sein, dass die Kohlenstoff-Nanofasern bei Temperaturen von mehr als 2500°C, vorzugsweise etwa 3000°C, in sauerstoffarmer, insbesondere sauerstofffreier, Atmosphäre gehärtet sind.

Eine Variante der Erfindung kann darin bestehen, dass das Kohlenstoff-Nanofasern/Polymer - Gemisch Thick-Multilayer-Nano-Tubes und wenigstens ein Polykondensat, Thermoplast und/oder Duroplast umfasst. Durch die Verwendung von Carbon Nano Fibres und/oder Thick-Multilayer-Nano-Tubes anstelle von Single Wall Carbon Nano Tubes kann der Abbrand der Kohlenstoff-Nanofasern noch weiter verringert werden, da die Carbon Nano Fibres und/oder Thick-Multilayer-Nano-Tubes durch deren mehrlagigen Aufbau thermisch stabiler sind, wodurch die Emissionseigenschaften und die Lebensdauer einer derart geschaffenen Feldemissionsschicht noch gesteigert werden kann. Ein, auch bei Carbon Nano Fibres und/oder Thick-Multilayer-Nano-Tubes vorhandener Abbrand fällt durch die gute Wärmeabfuhr wesentlich geringer aus als etwa bei Single Wall Carbon Nano Tubes bei den gleichen Temperaturen.

In Weiterbildung der Erfindung kann vorgesehen sein, dass lediglich die Kathoden-Elektrode mit dem Kohlenstoff-Nanofasern/Polymer - Gemisch erwärmt wird. Dadurch wird lediglich der Bereich gezielt erwärmt, welcher durch die Pyrolyse freigelegt werden soll. Durch die gezielte Wärmeeinwirkung kann das Freilegen der Kohlenstoff-Nanofasern und das Ausbilden von Emissionsspitzen durch die Kohlenstoff-Nanofasern unterstützt werden.

Gemäß einer weiteren Ausbildung der Erfindung kann vorgesehen sein, dass die Kohlenstoff-Nanofasern unter Einwirkung eines elektrostatischen Feldes ausgerichtet werden. Dadurch kann erreicht werden, dass die Kohlenstoff-Nanofasern im Wesentlichen senkrecht auf die Elektrode stehen und dadurch einen möglichst geringen Abstand zur Anode aufweisen, wodurch der notwendige Potentialunterschied zur Feldemission verringert wird. Ein geringerer Potentialunterschied bedeutet eine geringere anliegende Spannung und eine geringere Erwärmung der Kohlenstoff-Nanofasern, wodurch der Abbrand der Kohlenstoff-Nanofasern verringert wird und die Lebensdauer erhöht wird.

Gemäß wieder einer anderen Ausführungsform der Erfindung kann vorgesehen sein, dass das Kohlenstoff-Nanofasern/Polymer - Gemisch mittels Siebdruck auf die Kathoden-Elektrode aufgebracht wird. Dadurch können auf einfach automatisierbare Weise vorgebbare Strukturen auf einer Elektrode aufgebracht werden.

Eine andere mögliche Ausführungsform kann darin bestehen, dass das Kohlenstoff-Nanofasern/Polymer - Gemisch, welches auf die Kathoden-Elektrode aufgebracht wird, 1 - 30%, insbesondere 5 - 20%, vorzugsweise 10 - 15%, Kohlenstoff-Nanofasern und 70 - 99 %, insbesondere 80 - 95%, vorzugsweise 85 - 90% Polymer umfasst. Dadurch wird ein sehr vorteilhaftes Verhältnis zwischen der Emissionsfähigkeit der Feldemissionsschicht und der Anbindung an die Kathoden-Elektrode erreicht.

Im weiteren wird ein Leuchtschirm und/oder Bildschirm mit wenigstens einer Kathode und wenigstens einer Anode beschrieben, wobei die Kathode eine Feldemissionsschicht umfasst, welche wenigstens bereichsweise Kohlenstoff-Nanofasern umfasst, welche von einer ausgehärteten und/oder pyrolysierten polymeren Basis gehalten sind, und wobei die Anode wenigstens eine Leuchtschicht, vorzugsweise umfassend anorganische Leuchtstoffelement, umfasst.

Es sind Leuchtschirme, Bildschirme bzw. Displays bekannt, welche eine Feldemissionsscbicht umfassend Kohlenstoff-Nanofasern aufweisen. Insbesondere werden bei bekannten Feldemissions-Leuchtschirmen Single Wall Carbon Nano Tubes eingesetzt, da diese eine besonders hohe Emissionsfähigkeit aufweisen. Dabei wird ein Trägersubstrat, etwa eine Paste, welche Single Wall Carbon Nano Tubes umfasst auf eine Kathode aufgebracht. Mittels unterschiedlicher Verfahren, etwa mittels eines Klebebandes, welches auf das Trägersubstrat aufgebracht und von diesem abgezogen wird, werden wenigstens einzelne Single Wall Carbon Nano Tubes aus dem Trägermaterial herausgezogen. Wie eingangs bereits dargelegt, und gemäß den bereits beschriebenen Gründen, weisen derartige Leuchtschirme bzw. Feldernissionsschichten die Nachteile auf, dass diese schnell altern und eine geringe Lebensdauer aufweisen.

Um eine verbesserte Lebensdauer und Langzeitstabilität zu erreichen wird vorgeschlagen, dass die Kohlenstoff-Nanofasern einen Durchmesser größer 70nm, insbesondere größer 100nm, aufweisen.

Durch die Verwendung von Kohlenstoff-Nanofasern, welche insbesondere als Carbon Nano Fibrcs und/oder Thick-Multilayer-Nano-Tubes ausgebildet sind, mit einem Durchmesser von wenigstens 70nm anstelle von Single Wall Carbon Nano Tubes kann der Abbrand der Kohlenstoff-Nanofasern im Wesentlichen verhindert werden, da die Kohlenstoff-Nanofasern mit einem Durchmesser von wenigstens 70nm den bei der Feldemission auftretenden Temperaturen besser stand halten. Die entstehende Wärme kann durch die dicken Kohlenstoff-Nanofasern abgeführt werden. Ein, auch bei derartig dicken Kohlenstoff-Nanofasern vorhandener Abbrand fällt durch die gute Wärmeabfuhr wesentlich geringer aus als etwa bei Single Wall Carbon Nano Tubes bei den gleichen Temperaturen. Durch die größeren Durchmesser der Kohlenstoff-Nanofasern sind diese auch bei einem Abbrand, welcher bei Single Wall Carbon Nano Tubes bereits zu einer vollständigen Vernichtung der Faser geführt hätte, noch lange Zeit emissionsfähig, wobei nochmals darauf hingewiesen sein, dass der Grad an Abbrand bei erfindungsgemäßen Kohlenstoff-Nanofasern wesentlich geringer ist als bei Single Wall Carbon Nano Tubes.

Durch das Halten der Kohlenstoff-Nanofasern in einer ausgehärteten und/oder pyrolysierten polymeren Basis ist eine gute, dauerhafte und langzeitstabile Anbindung der Kohlenstoff-Nanofasern an die Kathode gegeben. Durch eine Pyrolyse kommt es zum Freilegen der obersten Schicht der Kohlenstoff-Nanofasern, wodurch diese gute Emissionseigenschaften aufweisen. Durch die Verwendung von dicken Kohlenstoff-Nanofasern und deren Fähigkeit Wärme abzuführen kann eine Pyrolyse ohne nennenswerte Beeinträchtigung der Emissionsdichte, etwa durch übermäßigen Abbrand von Kohlenstoff-Nanofasern, angewendet werden.

In diesen Zusammenhang kann vorgesehen sein, dass die Kohlenstoff-Nanofasern einen Durchmesser kleiner 300nm, insbesondere kleiner 200nm, aufweisen. Dadurch kann ein besonders gutes Gleichgewicht zwischen der Langzeitstabilität bzw. dem Wärmeabführvermögen, und der Emissionsfähigkeit erreicht werden.

In Weiterführung kann vorgesehen sein, dass die Kohlenstoff-Nanofasern bei Temperaturen von mehr als 2000°C, insbesondere mehr als 2500°C, vorzugsweise etwa 3000°C, in vorzugsweise sauerstoffarmer, insbesondere sauerstofffreier, Atmosphäre gehärtet sind. Durch das Aushärten bei den hohen Temperaturen in einer sauerstoffarmen Atmosphäre sind die Kohlenstoff-Nanofasern weitestgehend widerstandsfähig gegen Oxidation, sodass bei der Pyrolyse an einer Atmosphäre, umfassend Sauerstoff, lediglich das Polymer pyrolysiert bzw. ausgehärtet wird, ohne das es zu einem nennenswerten Abbrand der Kohlenstoff-Nanofasern kommt.

In diesem Zusammenhang kann in Weiterführung vorgesehen sein, dass die polymere Basis Duroplaste, vorzugsweise Epoxydharz und/oder Polyester, insbesondere ungesättigte Polyesterharze, umfasst. Dadurch ist eine besonders gute Pyrolyse möglich, und es ergibt sich durch die unter Wärme aushärtende Schicht eine besonders gute Anbindung an die Kathode.

In weiterer Ausgestaltung kann vorgesehen sein, dass die polymere Basis wenigstens ein Lösungsmittel umfasst. Dadurch können die Eigenschaften der polymeren Basis positiv beeinflusst werden.

Gemäß einer weiteren Ausführungsform kann vorgesehen sein, dass die Kohlenstoff-Nanofasern und/oder die polymere Basis auf einer, der Kathode zugehörigen, Metallelektrode, insbesondere umfassend Silber, angeordnet sind. Dadurch ist ein besonders gut leitfähiger und einfacher Aufbau einer Kathode möglich.

Gemäß wieder einer anderen Ausführungsform kann vorgesehen sein, dass an einer, der Kathode abgewandten, Seite der Leuchtschicht wenigstens eine wenigstens transluzente Platte, insbesondere eine erste Glasplatte oder eine Kunststoffplatte, angeordnet ist. Dadurch ist ein Lichtaustritt von der Leuchtschicht aus dem Leuchtschirm heraus möglich und ein guter und dauerhafter Schutz des Leuchtschirms gegeben.

Eine Variante kann darin bestehen, dass die Kathode, an einer der Anode abgewandten Seite, von einer zweiten Glasplatte abgeschlossen ist. Dadurch ist eine gute und wirkungsvolle Isolierung von weiteren Baugruppen möglich, wodurch durch die Glasplatte eine geringe parasitäre Kapazität aufgebaut wird, und eine Hintergrundbeleuchtung und/oder ein

Durchsichtdisplay möglich ist.

Gemäß einer weiteren Ausführungsform kann vorgesehen sein, dass Durchbrechungen der Kathode und/oder der Glasplatte, insbesondere diese durchdringende Risse, Löcher, Poren und/oder Fehlstellen, durch die polymere Basis vakuumdicht verschlossen sind. Dadurch können in einem einzigen Arbeitsgang mit lediglich einem Polymer die Pindurchführungen der Kathode und/oder der Glasplatte vakuumdicht verschlossen werden.

Die Erfindung wird unter Bezugnahme auf die beigeschlossenen Zeichnungen, in welchen eine lediglich besonders bevorzugte Ausführungsform dargestellt ist, näher beschrieben. Dabei zeigt:
Fig. 1 eine Schnittdarstellung eines erfindungsgemäßen Leuchtschirmes;
Fig. 2 eine Detailansicht der Kathode eines erfindungsgemäßen Leuchtschirmes;
Fig. 3 eine Detailansicht einer ersten Ausführungsform einer Thick-Multilayer-Nano-Tube; und
Fig. 4 eine Detailansicht einer zweiten Ausführungsform einer Thick-Multilayer-Nano-Tube.

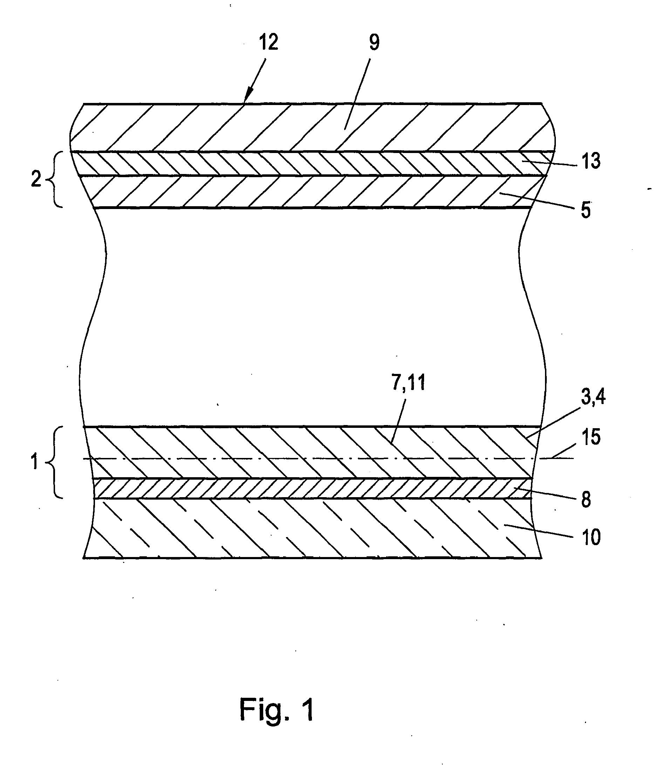

Die Fig. 1 bis 3 zeigen eine besonders bevorzugte Ausführungsform sowie Details einer besonders bevorzugten Ausführungsform eines Leuchtschirm und/oder Bildschirm mit wenigstens einer Kathode 1 und wenigstens einer Anode 2, wobei die Kathode 1 eine Feldemissionsschicht 3 umfasst, welche wenigstens bereichsweise Kohlenstoff-Nanofasern 4 umfasst, welche von einer ausgehärteten und/oder pyrolysierten polymeren Basis 7 gehalten sind, und wobei die Anode 2 wenigstens eine Leuchtschicht 5, vorzugsweise umfassend anorganische Leuchtstoffelemente, insbesondere dotierte seltene Erden, umfasst, wobei die Kohlenstoff-Nanofasern 4, welche insbesondere als Carbonnanofibres und/oder Thick-Multiwall-Nanotubes 6 ausgebildet sind, einen Durchmesser größer 70nm, insbesondere größer 100nm, aufweisen.

Für Leuchtschirm und/oder Bildschirm wird in der weiteren Folge lediglich der Begriff Leuchtschirm verwendet. Bei einem erfindungsgemäßen Leuchtschirm handelt es sich um einen Leuchtschirm für sog. Flachdisplays, wie etwa Flachbildschirme für Notebook-Computer, Digitalkameras, Mobiltelephone, Flachbildfernsehgeräte, Displays in

Flugzeugcockpits oder jede andere Anwendung eines flachen Bildschirms oder Leuchtschirms.

Erfindungsgemäße Leuchtschirme weisen wenigstens eine Kathode 1 und eine Anode 2 auf, welche wenigstens bereichsweise innerhalb des Leuchtschirms gegenüberliegend angeordnet sind. Vorzugsweise kann vorgesehen sein, dass jeweils gegenüber einer Anode 2 eine Kathode 1 angeordnet ist, bzw. umgekehrt. Es kann jede Art, Form und Struktur einer Anode 2 und/oder einer Kathode 1 vorgesehen sein. Insbesondere kann eine Mehrzahl an Kathoden 1 und/oder Anoden 2 vorgesehen sein. Es kann sowohl vorgesehen sein, Anoden 2 und/oder Kathoden 1 derart anzuordnen, dass ein erfindungsgemäßer Leuchtschirm zur Darstellung eines vorgebbaren Bildes fähig ist, etwa durch gezielte Ansteuerbarkeit einzelner Bildpunkte, es kann aber auch vorgesehen sein, dass die Anode 2 und/oder die Kathode 1 die Form und Ausgestaltung darzustellender Symbole, etwa bei Verwendung als Warn- und/oder Kontrollanzeige, als Siebensegmentanzeige oder als optischer Signalgeber mit lediglich eingeschränktem Zeichensatz, aufweist. Es kann vorgesehen sein, eine lediglich bereichsweise ausgeführte Kathode 1 gegenüber einer vollflächig ausgeführten Anode 2 anzuordnen und/oder umgekehrt.

Der Leuchtschirm ist bei einer bevorzugten Ausführungsform durch wenigstens eine wenigstens transluzente Platte 9, insbesondere eine erste Glasplatte oder eine Kunststoffplatte, etwa eine Acrylplatte bzw. eine Polymethylmethacrylatplatte nach einer von der Anode 2 abgewandten Außenseite 12 begrenzt.

Auf einer der Außenseite 12 abgewandten Seite der transluzenten Platte 9 ist die Anode 2 angeordnet. Die Anode 2 umfasst wenigstens eine Anoden-Elektrode 13, welche in einer einfachen Ausführung aus einer Mehrzahl dünner Aluminiumfäden gebildet sein kann, welche den Leuchtschirm überziehen, und in einer besonders bevorzugten Ausführungsform Indium-Zinn-Oxyd umfassen kann. Auf einer der Kathode 1 zugewandten Seite der Anode 2 ist in einer einfachsten Ausführung der Erfindung wenigstens eine Leuchtschicht 5 angeordnet, welche vorzugsweise anorganische Leuchtstoffelemente, etwa dotierte selten Erden und/oder Phosphor umfasst. Es können auch mehrere Leuchtschichten 5 vorgesehen sein, vorzugsweise drei, wobei jede für eine andere Farbe vorgesehen sein kann.

Nächst der, der Kathode 1 zugewandten Seite der Leuchtschicht 5 ist ein, vorzugsweise evakuierter, Raum vorgesehen, welcher durch die Kathode 1 begrenzt ist.

Die Kathode 1 umfasst wenigstens bereichsweise Kohlenstoff-Nanofasern 4, welche von einer ausgehärteten und/oder pyrolysierten polymeren Basis 7 gehalten sind. Die polymere Basis 7 ist auf einer Metallelektrode 8 angeordnet, bzw. mit einer solcher verbunden, wobei die Metallelektrode 8 vorzugsweise Kupfer, Aluminium und/oder Silber umfasst. Die Kathoden-Elektrode 8 kann vorzugsweise in Form dünner Drähte ausgebildet sein, wobei insbesondere eine matrizenartige Anordnung vorgesehen sein kann, mit welcher einzelne Bereiche bzw. Punkte der Kathode 1 gezielt angesteuert werden können. Die Kathode 1 ist bei einer besonders bevorzugten Ausführungsform an einer der Anode 2 abgewandten Seite, von einer zweiten Glasplatte 10 abgeschlossen bzw. begrenzt. Alternativ kann auch ein Spiegel oder eine Platte umfassend Kunststoff und/oder Metall vorgesehen sein. Bei besonders bevorzugten Ausführungsformen kann vorgesehen sein, dass das Kohlenstoff-Nanofasern 4/Polymergemisch mittels Siebdruck auf die Kathoden-Elektrode 8 aufgebracht wird, wodurch auf einfach automatisierbare Weise vorgebbare Strukturen auf einer Kathoden-Elektrode 8 aufgebracht werden können.

Bei erfindungsgemäßen Leuchtschirmen ist vorgesehen, dass einzig die Kohlenstoff-Nanofasern 4 der vorgesehenen Feldemission dienen. Bedingt durch die geringen Abmessungen derartiger Kohlenstoff-Nanofasern 4 treten an deren frei in den Raum stehenden Enden bei Anlegen eines Potentialunterschiedes zu einer gegenüber angeordneten Anode 1 lokal sehr hohe Feldstärken auf.

Fig. 1 zeigt einen Ausschnitt einer bevorzugten Ausführungsform eines erfindungsgemäßen Leuchtschirmes in geschnittener Darstellung, wobei gut die räumliche Trennung zwischen Anode 2 und Kathode 1 erkennbar ist, sowie der prinzipielle Aufbau der Anode 2 mit transluzenter Platte 9, Anoden-Elektrode 13 und Leuchtschicht 5, sowie der Kathode 1 mit zweiter Glasplatte 10, Kathoden-Elektrode 8 und der polymeren Basis 7 umfassend Kohlenstoff-Nanofasern 4.

Erfindungsgemäß ist vorgesehen, dass die Kohlenstoff-Nanofasern 4 einen Durchmesser von wenigstens 70nm, vorzugsweise 100 nm aufweisen, wobei es sich bei Kohlenstoff-Nanofasern 4 insbesondere um sog. Carbon Nano Fibres und/oder Thick-Multilayer-Nano-Tubes 6 handelt. Gemäß den üblichen technischen Bezeichnungen handelt es ich bei Carbon Nano Fibres und/oder Thick-Multilayer-Nano-Tubes 6 um Kohlenstoff-Nanofasern 4, welche, im Gegensatz zu den einwandigen Single Wall Carbon Nano Tubes eine Mehrzahl an Hüllen bzw. Schichten 14 aufweisen.

In der weiteren Folge wird für Carbon Nano Fibres und/oder Thick-Multilayer-Nano-Tubes 6 lediglich der Begriff Multilayer-Nano-Tubes 6 verwendet.

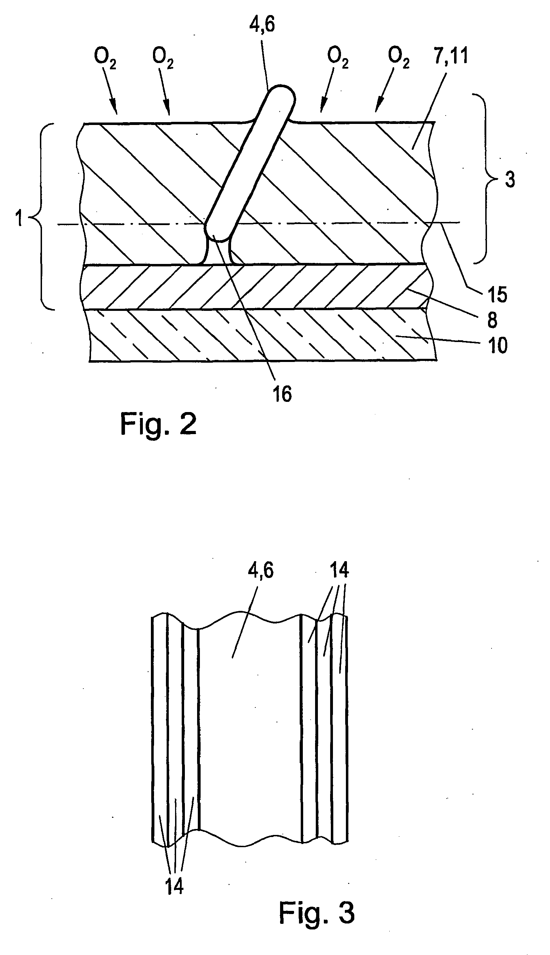

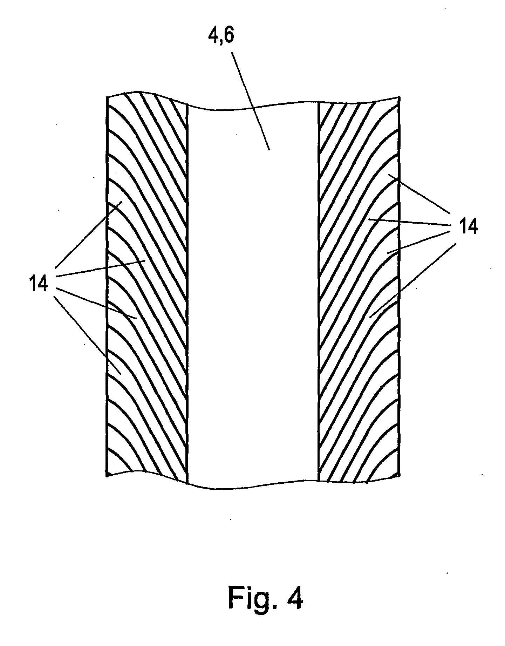

Durch die Mehrzahl an Hüllen und/oder Schichten weisen derartige Multilayer-Nano-Tubes 6 gegenüber Single Wall Carbon Nano Tubes wesentlich größere Durchmesser auf. Fig. 3 zeigt einen Teil einer ersten Ausführung einer Multilayer-Nano-Tube 6, welche drei aneinander grenzende Schichten 14 aufweist. Fig. 4 zeigt eine zweite Ausführung einer Multilayer-Nano-Tube 6, welche radial abgehende und dicht aneinander angeordnete Schichten 14 aufweist, wobei die derart gebildete Multilayer-Nano-Tube 6 im Wesentlichen zylindrisch ist. Es können auch mehr oder weniger Schichten 14 vorgesehen sein, als dargestellt, sowie Kombinationen der ersten und zweiten Ausführungsform. Bevorzugt ist vorgesehen, dass die Kohlenstoff-Nanofasern 4 einen Durchmesser aufweisen, welcher größer 70nm, insbesondere größer 100nm ist und vorzugsweise gleichzeitig kleiner 300nm, insbesondere kleiner 200nm, ist.

Durch die Verwendung von Multilayer-Nano-Tubes 6 anstelle von Single Wall Carbon Nano Tubes kann der Abbrand der Kohlenstoff-Nanofasern 4 im Wesentlichen verhindert werden, da die Multilayer-Nano-Tubes 6 den bei der Feldemission auftretenden Temperaturen weitestgehend gewachsen sind. Die entstehende Wärme kann durch die dicken Multilayer-Nano-Tubes 6 abgeführt werden. Hinzu kommt, dass die Kohlenstoffatome, welche in Multilayer-Nano-Tubes 6 angeordnet sind, eine festere Bindung aufweisen, als die Kohlenstoffatome in Single Wall Carbon Nano Tubes, weshalb diese bei hohen Temperaturen stabiler sind. Ein, auch bei Multilayer-Nano-Tubes 6 vorhandener Abbrand fällt durch die gute Wärmeabfuhr wesentlich geringer aus als etwa bei Single Wall Carbon Nano Tubes bei den gleichen Temperaturen. Durch die größeren Durchmesser der Multilayer-Nano-Tubes 6 sind diese auch bei einem Maß an Abbrand noch lange Zeit emissionsfähig, welcher bei Single Wall Carbon Nano Tubes bereits zu einer vollständigen Vernichtung der Faser geführt hätte, wobei nochmals darauf hingewiesen sein, dass der Grad an Abbrand bei Multilayer-Nano-Tubes 6 wesentlich geringer ist als bei Single Wall Carbon Nano Tubes.

Besonders bevorzugt ist vorgesehen, dass die Kohlenstoff-Nanofasern 4 bei Temperaturen von mehr als 2000°C, insbesondere mehr als 2500°C, vorzugsweise etwa 3000°C, in vorzugsweise sauerstoffarmer, insbesondere sauerstofffreier, Atmosphäre, etwa in einer Edelgasatmosphäre gehärtet sind, wodurch die Kohlenstoff-Nanofasern weitestgehend widerstandfähig gegen Oxidation sind, sodass bei der Pyrolyse an einer Atmosphäre, umfassend Sauerstoff, lediglich das Polymer pyrolysiert bzw. ausgehärtet wird, ohne das es zu einem nennenswerten Abbrand der Kohlenstoff-Nanofasern 4 kommt. Der Anteil der bei derart hohen Temperaturen ausgehärteten bzw. stabilisierten Kohlenstoff-Nanofasern 4 in einem Substrat, etwa einer fertigen Feldemissionsanzeige oder einem Kohlenstoff-Nanofasern 4/Polymer 11 - Gemisch kann messtechnisch etwa mittels einer sog. TGA - Thermogravimetric Analysis ermittelt werden.

Die Kohlenstoff-Nanofasern 4 sind in einer polymeren Basis 7 eingebetet bzw. werden von einer polymeren Basis 7 gehalten.

Gemäß einem erfindungsgemäßen Verfahren zur Herstellung einer Feldemissionsschicht 3, vorzugsweise für Leuchtschirmanwendungen, ist vorgesehen, dass auf einer, einer Kathode 1 zugeordneten, Kathoden-Elektrode 8 ein Gemisch aus einem Polymer 11 und Kohlenstoff-Nanofasern 4 aufgebracht wird, wobei die Kohlenstoff-Nanofasern 4 bei Temperaturen von mehr als 2000°C, insbesondere mehr als 2500°C, vorzugsweise etwa 3000°C, in sauerstoffarmer, insbesondere sauerstofffreier, Atmosphäre gehärtet sind, und dass die Kathoden-Elektrode 8 mit dem Kohlenstoff-Nanofasern 4/Polymer 11 - Gemisch auf eine Temperatur zwischen 300 °C und 500 °C, vorzugsweise zwischen 380°C und 480°C, insbesondere zwischen 420°C und 450°C, in einer zumindest Sauerstoff enthaltenden Atmosphäre, wie z.B. Luft, erwärmt wird, wobei es zufolge des Sauerstoffs zu einer Pyrolyse und/oder zu einem Aushärten der polymeren Basis 7 kommt, und wenigstens ein Teil der Kohlenstoff-Nanofasern 4 über wenigstens einen Teil der räumlichen Ausdehnung der Kohlenstoff-Nanofasern 4 freigelegt wird, insbesondere wenigstens über einen Teil der Länge der Kohlenstoff-Nanofasern 4, insbesondere wenigstens über die halbe Länge. Die Kohlenstoff-Nanofasern 4 wurden dabei vor Vermengung mit dem Polymer 11 bei Temperaturen von mehr als 2000°C, insbesondere mehr als 2500°C, vorzugsweise etwa 3000°C, in sauerstoffarmer, insbesondere sauerstofffreier, Atmosphäre gehärtet. Nach dem Härten werden die Kohlenstoff-Nanofasern 4 mit dem Polymer 11 vermengt und derart eine Paste gebildet, welche einfach und in lediglich einem Arbeitsgang auf die Kathoden-Elektrode 8 aufgebracht werden kann.

Bei der polymeren Basis 7 kann es sich daher um jede Art einer polymeren Verbindung handeln, mit welcher eine derartige Pyrolyse möglich ist. Vorzugsweise kann vorgesehen sein, dass die polymere Basis 7 Duroplaste, vorzugsweise Epoxydharz und/oder Polyester, insbesondere ungesättigte Polyesterharze, umfasst. Insbesondere kann vorgesehen sein, dass die polymere Basis 7 Bor und/oder Silber umfasst, wobei durch Silber die polymere Basis 7 leitfähiger und damit die elektrische Kontaktierung der Kohlenstoff-Nanofasern 4 verbessert wird und durch Bor die Verbrennung der Kohlenstoff-Nanofasern 4 während der Pyrolyse vermindert wird, wodurch nach der Pyrolyse eine größere Anzahl an Kohlenstoff-Nanofasern 4 für die Emission zur Verfügung stehen.

Zur einfacheren Verarbeitung und/oder zur Anpassung der Eigenschaften der polymeren Basis kann vorgesehen sein, dass die polymere Basis wenigstens ein Lösungsmittel umfasst.

Bei einer besonders bevorzugten Variante eines erfindungsgemäßen Verfahrens kann vorgesehen sein, dass lediglich die Kathoden-Elektrode 8 mit dem Kohlenstoff-Nanofasern 4/Polymer 11 - Gemisch erwärmt wird, wodurch lediglich der Bereich gezielt erwärmt wird, welcher durch die Pyrolyse freigelegt werden soll. Durch die gezielte Wärmeeinwirkung kann das Freilegen der Kohlenstoff-Nanofasern und das Ausbilden von Emissionsspitzen durch die Kohlenstoff-Nanofasern unterstützt werden.

Weiters kann eine gezielte Wärmeabfuhr von der Kathode vorgesehen sein, um die direkte Aufheizung der Kohlenstoff-Nanofasern zu verhindern, indem die Bereiche der Kohlenstoff-Nanofasern, welche nicht direkt der Erwärmung ausgesetzt sind gekühlt werden. Da die Kohlenstoff-Nanofasern Wärme außerordentlich gut leiten, führt dies zu einer effektiven Kühlung der Kohlenstoff-Nanofasern. Durch das Kühlen der Unterseite der Kathode bzw. des Trägers der Kathode wird die Lebensdauer der Kohlenstoff-Nanofasern während der Pyrolyse bzw. der damit einhergehenden Erwärmung verlängert, da die von den Kohlenstoff-Nanofasern weitergeleitete bzw. abgeführte Wärme gezielt von der Unterseite der Glasplatte entfernt werden kann. Dadurch werden weniger Kohlenstoff-Nanofasern bei der Pyrolyse zerstört und stehen zur Feldemission zur Verfügung.

Um ein ausgeglichenes und vorteilhaftes Verhältnis zwischen Emissionsfähigkeit der Feldemissionsschicht und der Anbindung an die Kathoden-Elektrode 8 zu erreichen kann vorgesehen sein, dass das Kohlenstoff-Nanofasern 4/Polymer 11 - Gemisch, welches auf die Kathoden-Elektrode 8 aufgebracht wird, 1 - 30%, insbesondere 5 - 20%, vorzugsweise 10 - 15%, Kohlenstoff-Nanofasern 4 und 70 - 99 %, insbesondere 80 - 95%, vorzugsweise 85 - 90% Polymer 11 umfasst.

Bei der Pyrolyse wird ein Großteil der polymeren Basis 7 abgetragen. Fig. 1 zeigt die polymere Basis 7 in deren voller Dicke vor der Pyrolyse. Durch eine strichpunktierte Linie 15 wird ein möglicher Oberflächenverlauf der polymeren Basis 7 nach erfolgter Pyrolyse veranschaulicht. An dieser Stelle sei angemerkt, dass es sich bei den Abmessungen der schematischen Darstellung gemäß Fig. 1 nicht um maßstabsgetreue Abmessungen bzw. Proportionen handeln muss.

Durch das Abtragen der polymeren Basis 7 werden die Kohlenstoff-Nanofasern 4 wenigstens einer obersten Schicht freigelegt, wodurch es zu guten Emissionseigenschaften kommt. Bei der Erwärmung der Kathode 1 und der zugehörigen polymeren Basis 7 kommt es nicht nur zu einer Pyrolyse der polymeren Basis 7, sondern auch zu einem bereichsweisen Aushärten selbiger. Vor allem Bereiche zwischen den einzelnen Kohlenstoff-Nanofasern 4 und der Metallelektrode 8 härten durch die Wärmeeinwirkung aus, ohne durch Pyrolyse abgetragen zu werden. Dadurch kommt es zu einer festen und dauerhaften Anbindung jeder einzelnen Kohlenstoff-Nanofaser 4. Durch das Halten der Multilayer-Nano-Tubes 6 in einer ausgehärteten und/oder pyrolysierten polymeren Basis 7 ist eine gute, dauerhafte und langzeitstabile Anbindung der Kohlenstoff-Nanofasern 4 an die Kathode 1 gegeben. Durch die Verwendung von Multilayer-Nano-Tubes 6 und deren Fähigkeit Wärme abzuführen kann eine Pyrolyse ohne nennenswerte Beeinträchtigung der Emissionsdichte, etwa durch übermäßigen Abbrand von Kohlenstoff-Nanofasern 4, angewendet werden.

Fig. 2 zeigt ein Detail einer schematischen Darstellung einer Kathoden-Elektrode 8 mit einer darauf angeordneten polymeren Basis 7, umfassend eine einzige Kohlenstoff-Nanofaser 4. Die schraffierte Fläche der polymeren Basis 7 veranschaulicht dabei deren Dicke vor der Pyrolyse. Die strichpunktierte Linie 15 zeigt den Oberflächenverlauf der polymeren Basis 7 nach erfolgter Pyrolyse. Die Pfeile mit der Beschriftung O₂ verweisen dabei auf den Einfluss des Sauerstoffs bei der Pyrolyse. Der Fußbereich 16 unter der Kohlenstoff-Nanofaser 4 härtet unter Einfluss der Pyrolysewärme und unter Sauerstoffmangel aus, wodurch es zu der bereits erwähnten guten und dauerhaften Anbindung der Kohlenstoff-Nanofaser 4 an die Kathoden-Elektrode 8 kommt.

Um die Betriebsspannung des Leuchtschirmes zu reduzieren bzw. die Lebensdauer weiter zu erhöhen kann vorgesehen sein, dass die Kohlenstoff-Nanofasern 4 unter Einwirkung eines elektrostatischen Feldes ausgerichtet werden. Dadurch kann erreicht werden, dass die Kohlenstoff-Nanofasern 4 im Wesentlichen senkrecht auf die Kathoden-Elektrode 8 stehen und dadurch einen möglichst geringen Abstand zur Anode 2 aufweisen, wodurch der notwendige Potentialunterschied zur Feldemission verringert wird. Ein geringerer Potentialunterschied bedeutet eine geringere anliegende Spannung und eine geringere Erwärmung der Kohlenstoff-Nanofasern 4, wodurch der Abbrand der Kohlenstoff-Nanofasern 4 verringert wird und die Lebensdauer erhöht wird.

Für eine weitere Verbesserung der Herstellung kann vorgesehen sein, dass Durchbrechungen der Kathode 1 und/oder der Glasplatte 10, insbesondere diese durchdringende Risse, Löcher, Poren und/oder Fehlstellen, durch die polymere Basis vakuumdicht verschlossen sind, wodurch in einem einzigen Arbeitsgang mit lediglich einem Polymer Fehlstellen der Kathode und/oder der Glasplatte vakuumdicht verschlossen werden können, sodass der Leuchtschirm bei geringeren Herstellungskosten eine höhere Lebensdauer aufweist, als bekannte Lösungen.

Weitere erfindungsgemäße Ausführungsformen weisen lediglich einen Teil der beschriebenen Merkmale auf, wobei jede Merkmalskombination vorgesehen sein kann.

## Patentansprüche

1. Verfahren zur Herstellung einer Feldemissionsschicht (3), vorzugsweise für Leuchtschirmanwendungen, wobei auf einer, einer Kathode (1) zugeordneten, Kathoden-Elektrode (8) ein Gemisch aus einem Polymer (11) und Kohlenstoff-Nanofasern (4) aufgebracht wird, wobei die Kohlenstoff-Nanofasern (4) bei Temperaturen von mehr als 2000°C, in sauerstoffarmer Atmosphäre gehärtet sind, **dadurch gekennzeichnet, dass** die Kathoden-Elektrode (8) mit dem Kohlenstoff-Nanofasern (4)/Polymer (11) - Gemisch auf eine Temperatur zwischen 300 °C und 500 °C in einer zumindest Sauerstoff enthaltenden Atmosphäre erwärmt wird, wobei es zufolge des Sauerstoffs zu einer Pyrolyse und/oder zu einem Aushärten der polymeren Basis (7) kommt, wenigstens ein Teil der Kohlenstoff-Nanofasern (4) über wenigstens einen Teil der räumlichen Ausdehnung der Kohlenstoff-Nanofasern (4) freigelegt wird, und dass die Kohlenstoff-Nanofasern (4) von der ausgehärteten und/oder pyrolysierten polymeren Basis (7) gehalten werden.

2. Verfahren nach Anspruch 1, **dadurch gekennzeichnet, dass** die Kathoden-Elektrode (8) mit dem Kohlenstoff-Nanofasern (4)/Polymer (11) - Gemisch in der zumindest Sauerstoff enthaltenden Atmosphäre auf eine Temperatur zwischen 380°C und 480°C, insbesondere zwischen 420°C und 450°C, erwärmt wird.

3. Verfahren nach Anspruch 1 oder 2, **dadurch gekennzeichnet, dass** wenigstens ein Teil der Kohlenstoff-Nanofasern (4) über wenigstens einen Teil der Länge der Kohlenstoff-Nanofasern (4), insbesondere wenigstens über die halbe Länge, freigelegt wird.

4. Verfahren nach einem der Ansprüche 1 bis 3, **dadurch gekennzeichnet, dass** die zumindest Sauerstoff enthaltenden Atmosphäre Luft beinhaltet.

5. Verfahren nach einem der Ansprüche 1 bis 4, **dadurch gekennzeichnet, dass** die Kohlenstoff-Nanofasern (4) bei Temperaturen von mehr als 2500°C, vorzugsweise etwa 3000°C, in sauerstoffarmer, insbesondere sauerstofffreier, Atmosphäre gehärtet sind.

6. Verfahren nach einem der Ansprüche 1 bis 5, **dadurch gekennzeichnet, dass** das Kohlenstoff-Nanofasern (4)/Polymer (11) - Gemisch Thick-Multilayer-Nano-Tubes (6) und wenigstens ein Polykondensat, Thermoplast und/oder Duroplast umfasst.

7. Verfahren nach einem der Ansprüche 1 bis 6, **dadurch gekennzeichnet, dass** lediglich die Kathoden-Elektrode (8) mit dem Kohlenstoff-Nanofasern (4)/Polymer (11) - Gemisch erwärmt wird.

8. Verfahren nach einem der Ansprüche 1 bis 7, **dadurch gekennzeichnet, dass** die Kohlenstoff-Nanofasern (4) unter Einwirkung eines elektrostatischen Feldes ausgerichtet werden.

9. Verfahren nach einem der Ansprüche 1 bis 8, **dadurch gekennzeichnet, dass** das Kohlenstoff-Nanofasern (4)/Polymer (11) - Gemisch mittels Siebdruck auf die Kathoden-Elektrode (8) aufgebracht wird.

10. Verfahren nach einem der Ansprüche 1 bis 9, **dadurch gekennzeichnet, dass** das Kohlenstoff-Nanofasern (4)/Polymer (11) - Gemisch, welches auf die Kathoden-Elektrode (8) aufgebracht wird, 1 - 30%, insbesondere 5 - 20%, vorzugsweise 10 - 15%, Kohlenstoff-Nanofasern (4) und 70 - 99 %, insbesondere 80 - 95%, vorzugsweise 85 - 90% Polymer (11) umfasst.

## Claims

1. A method for producing a field-emission layer (3), preferably for fluorescent screen applications, with a mixture of a polymer (11) and carbon nanofibers (4) being applied to a cathode electrode (8) which is associated with a cathode (1), with the carbon nanofibers (4) being hardened at temperatures of more than 2000°C under an atmosphere low in oxygen, **characterized in that** the cathode electrode (8) with the carbon nanofiber (4)/polymer (11) mixture is heated to a temperature of between 300°C and 500°C in an atmosphere containing at least oxygen, with a pyrolysis and/or a curing of the polymer base (7) occurring as a result of the oxygen, at least a portion of the carbon nanofibers (4) is exposed over at least a part of the spatial extension of the carbon nanofibers (4), and the carbon nanofibers (4) are held by the cured and/or pyrolysed polymer base (7).

2. A method according to claim 1, **characterized in that** the cathode electrode (8) with the carbon nanofiber (4)/polymer (11) mixture is heated to a temperature of between 380°C and 480°C, especially between 420°C and 450°C, in the atmosphere which at least contains oxygen.

3. A method according to claim 1 or 2, **characterized in that** at least a portion of the carbon nanofibers (4) is exposed over at least a part of the length of the carbon nanofibers (4), especially at least over half the length.

4. A method according to one of the claims 1 to 3, **characterized in that** the atmosphere at least containing oxygen contains air.

5. A method according to one of the claims 1 to 4, **characterized in that** the carbon nanofibers (4) are cured at temperatures of more than 2500°C, preferably approximately 3000°C, in a low-oxygen, especially oxygen-free, atmosphere.

6. A method according to one of the claims 1 to 5, **characterized in that** the carbon nanofiber (4)/polymer (11) mixture comprises thick multilayer nanotubes (6) and at least one polycondensate, thermoplastic material and/or thermosetting plastics.

7. A method according to one of the claims 1 to 6, **characterized in that** merely the cathode electrode (8) with the carbon nanofiber (4)/polymer (11) mixture is heated.

8. A method according to one of the claims 1 to 7, **characterized in that** the carbon nanofibers (4) are aligned under the influence of an electrostatic field.

9. A method according to one of the claims 1 to 8, **characterized in that** the carbon nanofiber (4)/polymer (11) mixture is applied by means of screen printing to the cathode electrode (8).

10. A method according to one of the claims 1 to 9, **characterized in that** the carbon nanofiber (4)/polymer (11) mixture which is applied to the cathode electrode (8) comprises 1 to 30%, especially 5 to 20%, preferably 10 to 15% of carbon nanofibers (4), and 70 to 99%, especially 80 to 95%, preferably 85 to 90% of polymer (11).

## Revendications

1. Procédé de fabrication d'une couche d'émission de champ, de préférence pour des applications d'écran luminescent, dans lequel un mélange d'un polymère (11) et de nanofibres de carbone (4) est appliqué sur une électrode de cathode (8) associée à une cathode (1), les nanofibres de carbone (4) étant durcies à une température de plus de 2000°C dans une atmosphère pauvre en oxygène, **caractérisé en ce que** l'électrode de cathode (8) est chauffée avec le mélange de nanofibres de carbone (4) et de polymère (11) à une température comprise entre 300°C et 500°C dans une atmosphère contenant au moins de l'oxygène, lequel oxygène entraîne une pyrolyse et/ou un durcissement de la base polymère (7), une partie au moins des nanofibres de carbone (4) est exposée sur au moins une partie de l'extension spatiale des nanofibres de carbone (4), et les nanofibres de carbone (4) sont retenues par la base polymère (7) durcie et/ou pyrolysée.

2. Procédé selon la revendication 1, **caractérisé en ce que** l'électrode de cathode (8) est chauffée avec le mélange de nanofibres de carbone (4) et de polymère (11) dans l'atmosphère contenant au moins de l'oxygène à une température comprise entre 380°C et 480°C, de préférence entre 420°C et 450°C.

3. Procédé selon la revendication 1 ou 2, **caractérisé en ce qu'**au moins une partie des nanofibres de carbone (4) est exposée sur au moins une partie de la longueur des nanofibres de carbone (4), en particulier sur au moins la moitié de la longueur.

4. Procédé selon l'une des revendications 1 à 3, **caractérisé en ce que** l'atmosphère contenant au moins de l'oxygène contient de l'air.

5. Procédé selon l'une des revendications 1 à 4, **caractérisé en ce que** les nanofibres de carbone (4) sont durcies à des températures supérieures à 2500°C, de préférence d'environ 3000°C, dans une atmosphère pauvre en oxygène, en particulier sans oxygène.

6. Procédé selon l'une des revendications 1 à 5, **caractérisé en ce que** le mélange de nanofibres de carbone (4) et de polymère (11) contient des nanotubes en multicouche épaisse (6) et au moins un polycondensat, un thermoplastique et/ou un plastique thermodurcissable.

7. Procédé selon l'une des revendications 1 à 6, **caractérisé en ce que** seule l'électrode de cathode (8) est chauffée avec le mélange de nanofibres de carbone (4) et de polymère (11).

8. Procédé selon l'une des revendications 1 à 7, **caractérisé en ce que** les nanofibres de carbone (4) sont orientées sous l'action d'un champ électrostatique.

9. Procédé selon l'une des revendications 1 à 8, **caractérisé en ce que** le mélange de nanofibres de carbone (4) et de polymère (11) est appliqué sur l'électrode de cathode (8) par sérigraphie.

10. Procédé selon l'une des revendications 1 à 9, **caractérisé en ce que** le mélange de nanofibres de carbone (4) et de polymère (11) appliqué sur l'électrode de cathode (8) contient entre 1 et 30 %, de préférence entre 5 et 20 % et en particulier entre 10 et 15 % de nanofibres de carbone (4) et entre 70 et 99 %, de préférence entre 80 et 95 % et en particulier entre 85 et 90 % de polymère (11).
